# EUROPÄISCHE PATENTANMELDUNG

(11) **EP 1 668 978 A1**
(43) Veröffentlichungstag der Anmeldung: **14.06.2006**
(21) Anmeldenummer: 05022192.8
(22) Anmeldetag: 12.10.2005
(51) Int. Cl.: A01G 5/04, A47G 7/03

(54) **Halter für natürliche Blumen, Zweige und dergleichen**

(30) Priorität: 11.12.2004 DE 102004059832
(71) Anmelder: Smithers-Oasis Germany GmbH, 67269 Grünstadt (DE)
(72) Erfinder: Brinc, Julii, 8332 Gradac (SI)
(74) Vertreter: Kesselhut, Wolf

(57) **Zusammenfassung**

Ein Halter für natürliche Blumen, Zweige und dergleichen, umfassend eine Basis (2) und einen darauf angeordneten Steckschaumkörper (4) aus hydrophilem oder hydrophobem Schaumkunststoff, zeichnet sich dadurch aus, dass die Basis (2) aus selbstschäumendem Kunststoffmaterial (50), insbesondere PU-Schaum besteht oder einen solchen enthält, in die der Steckschaumkörper (4) eingeschäumt ist, und dass an der Basis (2) wenigstens eine Rast-Aufnahme (8) angeordnet ist, in die ein Halteelement (10) zur Befestigung der Basis (2) an einem Trägerkörper (6) von der Unterseite (18) der Basis (2) her einrastbar ist.

## Beschreibung

Die Erfindung betrifft einen Halter mit einer Basis und einem darauf angeordneten Steckschaumkörper aus hydrophilem oder hydrophobem Schaumkunststoff zur universellen Befestigung von natürlichen Blumen, Zweigen, Ästen, Früchten sowie Dekorationsmaterialien gemäß dem Oberbegriff von Anspruch 1.

Aus dem Bereich der Floristik sind Halter für natürliche Blumen, Zweige und dergleichen bekannt, die einen aus Phenolschaum bestehenden Steckschaumkörper und eine aus Hartplastik gebildete Basis umfassen. Die natürlichen Blumen, Zweige und dergleichen werden hierbei in den Steckschaumkörper gesteckt, wobei der Steckschaumkörper zur Verlängerung der Haltbarkeit der eingesteckten Blumen, Zweige und dergleichen mit Wasser getränkt sein kann.

So ist aus der DE 32 21 714 A1 der Anmelderin ein Gesteckhalter bekannt, der zur Befestigung von Dekorationsmaterialien auf Trägerkörpern mit glatten Oberflächen dient. Der Gesteckhalter umfasst hierbei einen Grundkörper mit einem darauf aufgesteckten Steckschaumkörper, der zusätzlich von einem mit dem Grundkörper verbundenen Gitter auf diesem gehalten wird. Zur Befestigung des Gesteckhalters auf glatten Oberflächen ist mittig auf der Unterseite des Grundkörpers ein Gummisauger angeordnet.

Ein weiterer Gesteckhalter der Anmelderin ist in der DE 200 18 163 U1 gezeigt, bei welchem der Steckschaumkörper von einem Gitter umgeben ist, welches an einen unter dem Steckschaumkörper angeordneten Grundkörper einklipsbar ist. In einer an der Unterseite des Grundkörpers angeordneten Haltebuchse ist ein Stift eines Halteelementes einrastbar an dessen Ende sich eine flexible Grundplatte befindet, die zur Befestigung des Gesteckhalters auf einen dafür geeigneten Trägerkörper aufklebbar ist.

Die Grundkörper der aus dem Stand der Technik bekannten Gesteckhalter bestehen hierbei aus vorgefertigten Einzelteilen, vorzugsweise aus Hartplastik oder einem anderen Kunststoffmaterial, und lassen das im Steckschaumkörper enthaltene Wasser nahezu ungehindert ablaufen. Weiterhin stellt die Verbindung zwischen Grundkörper und Gitter einen Schwachpunkt dar, da für eine wirtschaftliche Herstellung derartiger Gesteckhalter Fertigungstoleranzen in Kauf genommen werden müssen, die die Qualität der Verbindung zwischen Gitter und Grundkörper beeinträchtigen.

Weiterhin ist es bekannt, den Steckschaumkörper entweder über eine Klebeverbindung oder eine Steckverbindung mit dem Grundkörper zu verbinden. Für die Klebeverbindung sind aufgrund der unterschiedlichen Materialien des Grundkörpers und des Steckschaumkörpers sowie dessen hohe Porosität spezielle Klebstoffe notwendig, wobei die Klebeverbindung aufgrund der geringen Festigkeit und der hohen Deformierbarkeit des Steckschaumkörpers jedoch nur eine beschränkte Haltbarkeit aufweist. Bei einer Steckverbindung über am Grundkörper angeordnete Zapfen ergibt sich aufgrund der hohen Deformierbarkeit des Steckschaumkörpers das Problem, dass dieser unter der Einwirkung einer Kraft von außen leicht vom Grundkörper gelöst werden kann.

Aufgrund der eingeschränkten Verbindungsmöglichkeiten des Steckschaumkörpers mit dem Grundkörper sind auch die Möglichkeiten zur Befestigung des Halters eingeschränkt, da beispielsweise bei einer Befestigung des Halters an einer schrägen Fläche die Gefahr besteht, dass sich der Steckschaumkörper mit den darin eingesteckten Blumen und Zweigen aufgrund des Gewichts der Dekorationsmaterialien von dem Grundkörper löst.

Der Erfindung liegt somit die Aufgabe zugrunde, einen derartigen Halter so auszubilden, dass der Halter universell befestigbar und leicht herstellbar ist.

Diese Aufgabe wird gemäss der Erfindung durch die Merkmale von Anspruch 1 gelöst.

Weitere Merkmale der Erfindung sind in den Unteransprüchen enthalten.

Gemäss der Erfindung umfasst ein Halter für natürliche Blumen, Zweige und dergleichen eine Basis und einen darauf angeordneten Steckschaumkörper aus hydrophilem oder hydrophobem Schaumkunststoff, vorzugsweise aus Phenolschaum, wohingegen die Basis aus einem selbstschäumenden Kunststoffmaterial, insbesondere PU-Schaum, besteht oder ein solches selbstschäumendes Kunststoffmaterial enthält. Vorzugsweise ist der Steckschaumkörper hierbei in einem unteren Abschnitt in die Basis eingeschäumt, so dass der untere Abschnitt des Steckschaumkörpers von einem umlaufenden Rand und der Oberseite der Basis begrenzt ist. Hierdurch ergibt sich der Vorteil, dass auf eine aufwendig herzustellende Klebeverbindung verzichtet werden kann.

In eine an der Basis angeordnete Rast-Aufnahme ist hierbei erfindungsgemäß ein Halteelement von der Unterseite der Basis her einrastbar, so dass der Halter in vorteilhafter Weise über das Haltelement an einem Trägerkörper befestigbar ist.

Der Rast-Aufnahme ist erfindungsgemäß ein Verankerungselement zugeordnet, welches die Rast-Aufnahme in der Basis verankert. Für die Herstellung einer dauerhaften und belastbaren Verbindung zwischen der Basis und dem Verankerungselement weist dieses hierfür Ausnehmungen auf, durch die das selbstaufschäumende Kunststoffmaterial der Basis hindurchtritt. Vorzugsweise ist das Verankerungselement hierbei zusammen mit der Rastaufnahme in die Basis eingeschäumt und auf diese Weise somit als integraler Bestandteil fest in der Basis verankert.

In einer weiteren vorteilhaften Ausführungsform der Erfindung besteht das Verankerungselement aus einem Kunststoffformteil, welches einen Ring aufweist, der über Stege mit einer scheibenförmigen Grundplatte kleineren Durchmessers verbunden ist. Am einem Ende der Rast-Aufnahme, die vorzugsweise eine hohlzylindrische Form aufweist, ist eine Abstufung vorgesehen, die in eine in der Grundplatte des Verankerungselementes angeordnete Vertiefung eingreift. Die Abstufung ist hierbei vorzugsweise kreisringförmig und weist einen geringfügig größeren Außendurchmesser als die kreisförmige Vertiefung in der Grundplatte des Verankerungselementes in der Art auf, dass die Abstufung der Rast-Aufnahme in die kreisförmige Vertiefung des Verankerungselementes einklemmbar ist.

In erfindungsgemäßer Weise weisen das Verankerungselement und/oder die Rast-Aufnahme eine Höhe auf, die im Wesentlichen der Höhe der Basis entspricht, so dass die Rast-Aufnahme und/oder das Verankerungselement nicht aus der Basis herausragt und die Unterseite der Basis in vorteilhafter Weise eine ebene Fläche bildet.

Zur Herstellung des erfindungsgemäßen Haltes wird die Rast-Aufnahme und/oder das Verankerungselement in eine Gussform eingelegt, wobei die Rast-Aufnahme erfindungsgemäß auf dem Boden der Gussform angeordnet ist. Weiterhin wird der Steckschaumkörper von oben her in die Gussform eingebracht und auf die Verankerungselemente aufgelegt. Vorzugsweise befinden sich die Verankerungselemente hierbei zwischen den am Boden der Gussform angeordneten Rast-Aufnahmen und dem Steckschaumkörper, so dass der Steckschaumkörper sich vom Boden der Gussform her über die Rast-Aufnahmen und die Verankerungselemente abstützt. Nachdem der Steckschaumkörper sich auf der Oberseite der Verankerungselemente abstützend in die Gussform eingebracht wurde, wird eine den Steckschaumkörper übergreifende Verschlusshaube geschlossen und die Gussform von unten her mit dem selbstschäumenden Kunststoffmaterial beaufschlagt, welches die Rast-Aufnahme und/oder das Verankerungselement in vorteilhafter Weise einschäumt. Beim Aufschäumen des Kunststoffmaterials drückt sich dieses in der Art gegen die Wände der Gussform/Verschlusshaube, so dass die insbesondere aus einem offenporigen Material gebildete Basis von einer im Wesentlichen geschlossenporigen Haut überzogen ist. Hierdurch ergibt sich der Vorteil, dass im Steckschaumkörper enthaltenes Blumenwasser weitgehend nicht über die Basis nach außen abfließen kann.

In einer weiteren Ausführungsform der Erfindung ist der Steckschaumkörper mit einem unteren Bereich in die Basis eingeschäumt, wobei die Basis eine größere Breite und/oder Länge als der Steckschaumkörper aufweist und dieser vorzugsweise von einem umlaufenden Rand der Basis eingefasst wird. Der umlaufende Rand fixiert in vorteilhafter Weise den Steckschaumkörper auf der Basis und verhindert hierbei weiterhin ein Abfließen des Wassers, welches sich im unteren Bereich des Steckschaumkörpers ansammelt und die Haltbarkeit der eingesteckten natürlichen Blumen, Zweige und dergleichen verlängert.

Erfindungsgemäß ist der Steckschaumkörper mit einem Verstärkungs-Geflecht, insbesondere aus Metalldraht überzogen, welches sich bis in die Basis hinein erstreckt und insbesondere eingeschäumt ist. Hierdurch ergibt sich der Vorteil, dass der Steckschaumkörper von der Basis und dem Verstärkungs-Geflecht allseitig umfasst wird und nicht mehr von der Basis entfernbar ist. Bei der Herstellung des Halters wird nach dem Einlegen der Rast-Aufnahme und/oder des Verankerungselementes sowie des Steckschaumkörpers das Verstärkungs-Geflecht über den Steckschaumkörper gestülpt, bevor die Gussform durch die Verschlusshaube verschlossen und von unten her mit selbstschäumendem Kunststoffmaterial beaufschlagt wird.

In erfindungsgemäßer Weise weist das Haltelement einen in die Rast-Aufnahme einsteckbaren Rastfuß mit einem pilz- oder pfeilförmigen Kopf auf. Das vorzugsweise als Hohlzylinder ausgestaltete Halteelement weist hierbei eine Ausnehmung auf, in welcher Widerhaken angeordnet sind, die sich nach dem Einstecken des des pilz- oder pfeilförmigen Kopfes des Haltelements an diesem abstützen und ein Herausziehen des Halteelements in vorteilhafter Weise verhindern.

Das Halteelement besteht hierbei aus einen Mittelteil aus flexiblem Material, das sich bei eingestecktem Rastfuß über die Unterseite der Basis hinaus erstreckt. Hierdurch ist es möglich, die Basis auf einer unebenen oder ungleichförmig gewölbten Oberfläche eines Trägerkörpers zu befestigen, da das Haltelement in vorteilhafter Weise durch Biegen entsprechend der Unebenheiten oder der Wölbungen des Trägerkörpers angepasst werden kann.

Weiterhin kann es vorgesehen sein, dass das Haltelement an dem der Rast-Aufnahme abgewandten Ende einen bekannten Saugnapf oder eine selbstklebende Fläche zur Befestigung des Halteelements auf einer glatten Oberfläche aufweist.

In einer weiteren Ausführungsform der Erfindung kann es vorgesehen sein, dass das Halteelement an dem der Rast-Aufnahme abgewandten Ende ein Halteelement aus magnetischem Material umfasst, welches an einem magnetischen Trägerkörper, wie beispielsweise der Motorhaube eines Kraftfahrzeuges, befestigbar ist.

Zur Befestigung der Basis im Erdreich ist es weiterhin möglich, dass das Halteelement an dem der Rast-Aufnahme abgewandten Ende einen Spieß zum Einstecken in das Erdreich aufweist. Zudem kann es vorgesehen sein, dass an dem der Rast-Aufnahme abgewandten Ende auch eine Spiralfeder zum Eindrehen des Halteelements insbesondere in Strohballen und dergleichen vorgesehen ist.

Erfindungsgemäß sind an der Basis mehrere Rast-Aufnahmen angeordnet, die in vorteilhafter Weise eine sichere Verbindung des Halters am Trägerkörper über mehrer Befestigungspunkte ermöglichen.

Die Erfindung wird nachfolgend mit Bezug auf die Zeichnung anhand von bevorzugten Ausführungsformen beschrieben.

In den Zeichnungen zeigen:
- Fig. 1: eine schematische räumliche Darstellung mit einer Sicht auf die Unterseite eines erfindungsgemäßen Halters mit einem in die Basis eingesteckten Halteelements mit Saugnapf,
- Fig. 2: eine schematischer Schnittdarstellung durch eine Rast-Aufnahme, einem Verankerungselement und einem in die Rast-Aufnahme eingesteckten Halteelement mit Saugnapf,

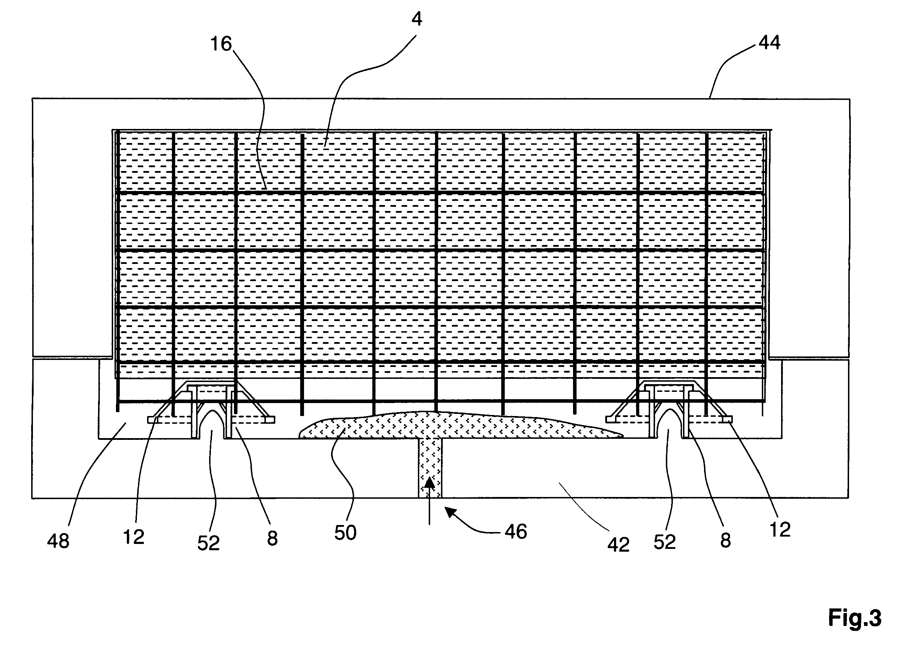

- Fig. 3: eine schematische Schnittdarstellung durch eine Gussform zur Herstellung eines erfindungsgemäßen Halters.

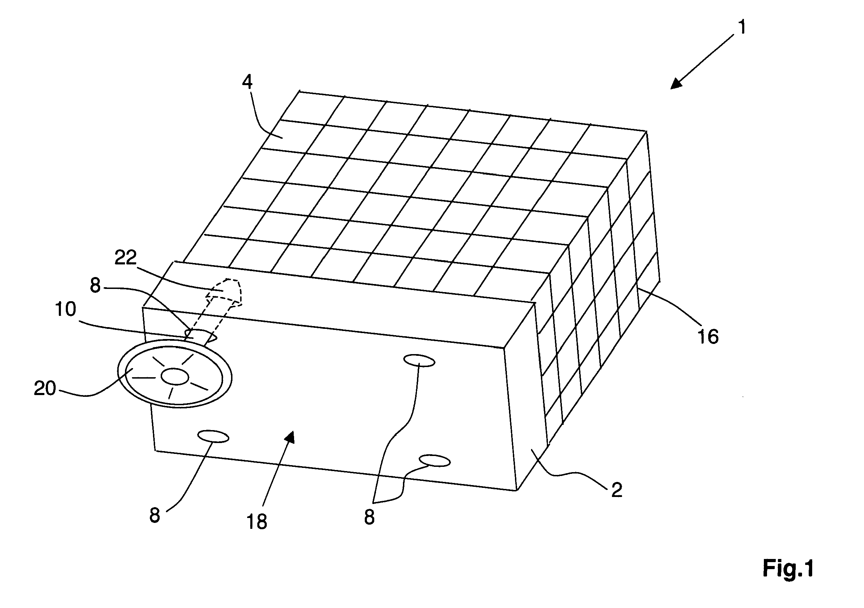

Bei der Verwendung eines in Fig. 1 dargestellten erfindungsgemäßen Halters 1 im Bereich der Floristik sind in den Steckschaumkörper 4 die Stiele von nicht dargestellten natürlichen Blumen, Zweigen und dergleichen einsteckbar, wobei die natürlichen Blumen, Zweige und dergleichen von dem Steckschaumkörper 4 in der eingesteckten Position gehalten werden. Zur Verlängerung der Haltbarkeit der natürlichen Blumen, Zweige und dergleichen ist der vorzugsweise offenporige Steckschaumkörper 4 mit Wasser befüllbar.

Der erfindungsgemäße Halter 1 umfasst hierbei eine Basis 2 und einen darauf angeordneten Steckschaumkörper 4, der aus hydrophilem oder hydrophobem Schaumkunststoff besteht. Zum Schutz und zur Stabilisierung der äußeren Form des leicht deformierbaren Steckschaumkörpers 4 ist dieser mit einem Verstärkungs-Geflecht 16 versehen, das vorzugsweise aus Metalldraht besteht und in der Art eines Netzes mit rechteckigen Maschen den Steckschaumkörper 4 überzieht. Hierbei ist das Verstärkungs-Geflecht 16 erfindungsgemäß in die Basis 2 eingeschäumt, so dass in vorteilhafter Weise der Steckschaumkörper 4 über das Verstärkungs-Geflecht 16 mit der Basis 2 dauerhaft verbunden ist und einen einteiligen Körper bildet.

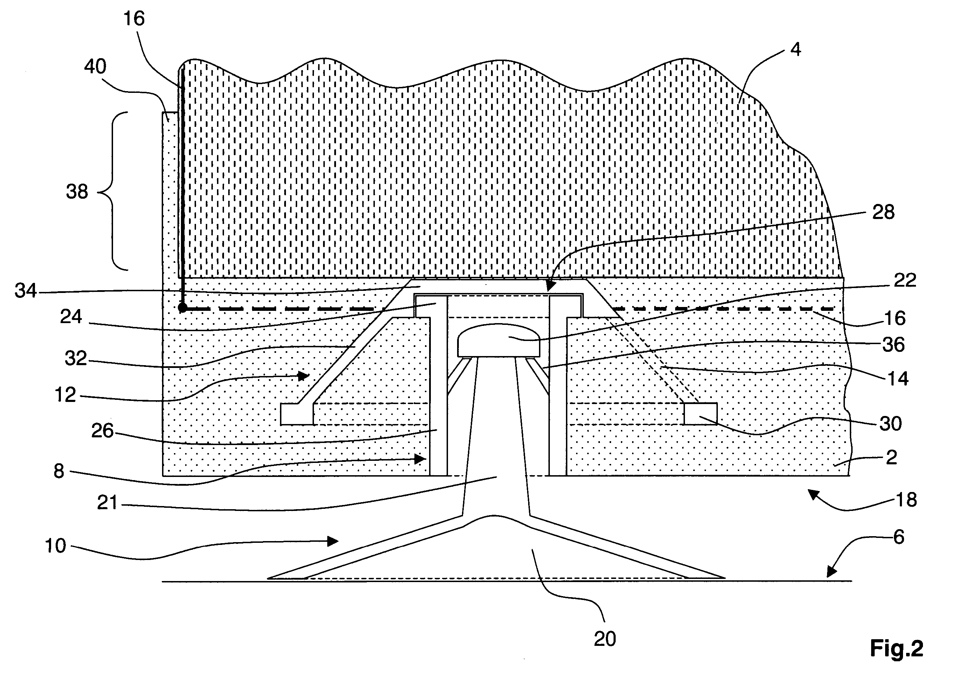

Um den erfindungsgemäßen Halter 1 lösbar auf einem Trägerkörper, wie z.B. einem Tisch mit glatter Oberfläche zu befestigen, sind auf der Unterseite 18 der Basis 2 Rast-Aufnahmen 8 angeordnet, in die die Halteelemente 10 einrastbar sind. So ist in Fig.1 ein Halteelement 10 dargestellt, an dessen einem Ende ein Saugnapf 20 zur Befestigung des erfindungsgemäßen Halters 1 auf einer in Fig.1 nicht dargestellten glatten Oberflächen angebracht ist. Das dem Saugnapf 20 gegenüberliegende Ende weist hingegen einen pilzförmigen Kopf 22 auf, der in die in Fig.2 näher dargestellte Rast-Aufnahme 8 eingreift.

In dem in Fig.2 gezeigten Ausschnitt des erfindungsgemäßen Halters 1 ist ein Halteelement 10 mit einem Saugnapf 20 und einem pilzförmigen Kopf 22 dargestellt, der in eine Rast-Aufnahme 8 eingerastet ist. Der Rast-Aufnahme 8 ist hierbei ein Verankerungselement 12 zugeordnet, wobei die Rast-Aufnahme 8 einen hohlzylindrischen Grundkörper 26 mit einem eine Abstufung 24 aufweisendes Ende umfasst. Die vorzugsweise ringförmige Abstufung 24 weist hierbei einen größeren Außendurchmesser als der hohlzylindrische Grundkörper 26 auf und greift in eine im Verankerungselement 12 enthaltene vorzugsweise kreisförmige Vertiefung 28 von unten her ein, wobei der Außendurchmesser der Abstufung 24 im Wesentlichen gleich, insbesondere jedoch geringfügig größer als der Innendurchmesser der Vertiefung 28 ist, so dass die Rast-Aufnahme 8 in das Verankerungselement 12 einklemmbar ist. Hierdurch ergibt sich der Vorteil, dass die Rast-Aufnahme 8 und das Verankerungselement 12 vormontierbar sind und bei der Herstellung des erfindungsgemäßen Halters 1 nur mit wenigen Einzelteilen hantiert werden muss.

Das Verankerungselement 12 ist im Wesentlichen kreisförmig und besteht aus einem unteren Ring 30, der über Stege 32 mit einer scheibenförmigen Grundplatte 34 verbunden ist, welche eine kreisförmige Vertiefung 28 zur Aufnahme der Abstufung 24 der Rast-Aufnahme 8 aufweist. In vorteilhafter Weise ist das Verankerungselement 12 vollständig in die Basis 2 eingeschäumt, wobei durch die zwischen Ring 30 und scheibenförmiger Grundplatte 34 vorhandenen Ausnehmungen 14 das selbstschäumende Kunststoffmaterial 50 der Basis 2 hindurchtritt. Auf der Oberseite der scheibenförmigen Grundplatte 34 des Verankerungselementes 12 grenzt der Steckschaumkörper 4 an, der von dem Verstärkungs-Geflecht 16 gehalten wird. Das Verstärkungs-Geflecht 16 erstreckt sich hierbei von den äußeren Oberflächen des Steckschaumkörpers 4 in die Basis 2 hinein.

Der in einem unteren Bereich 38 der Basis 2 eingeschäumte Steckschaumkörper 4 wird auf der Unterseite von der Basis 2 begrenzt, wobei der Basis 2 ein um den Steckschaumkörper 4 umlaufender Rand 40 zugeordnet sein kann, der den Steckschaumkörper 4 in der Art einer Fassung einfasst. Der umlaufende Rand 40 verhindert hierbei, dass sich im unteren Bereich 38 des Steckschaumkörpers 4 ansammelndes Wasser abfließt, wodurch sich in vorteilhafter Weise ein Reservoir mit Wasser zur Versorgung der eingesteckten natürlichen Blumen, Zweige und dergleichen bilden kann. Die Grenzschicht zwischen dem Steckschaumkörper 4 und der Basis 2 mit dem umlaufenden Rand 40 ist hierbei vorzugsweise wasserundurchlässig.

Das Haltelement 10 weist an einem ersten Ende einen Saugnapf 20 zur Befestigung des erfindungsgemäßen Halters 1 auf einer glatten Oberfläche eines Trägerkörpers 6 auf, der über ein Mittelteil 21 mit einem am zweiten Ende angeordneten pilzförmigen Kopf 22 verbunden ist. Das Mittelteil 21 besteht hierbei erfindungsgemäß aus einem flexiblen Material, z.B. Gummi oder Polyurethan, so dass der Saugnapf 20 an eine unebene Oberfläche des Trägerkörpers 6 anpassbar ist, wobei jedoch auch das gesamte Halteelement 10 beispielsweise als Spritzgussteil aus dem flexiblen Material bestehen kann.

Der pilzförmige Kopf 22 des Haltelements 10 ragt hierbei in das Innere des hohlzylindrischen Grundkörpers 26 der Rast-Aufnahme 8 ein und wird durch an den Innenflächen des hohlzylindrischen Grundkörpers 26 angeordnete Widerhaken 36 gegen ein Herausziehen gesichert, wobei sich die Widerhaken 36 bei einem Herausziehen des Halteelements 10 gegen die Unterseite des pilzförmigen Kopfes 22 abstützen.

Zur Herstellung des erfindungsgemäßen Halters 1 werden die Rast-Aufnahmen 8 und die vorzugsweise mit den Rast-Aufnahmen 8 verbundenen Verankerungselemente 12 in eine Gussform 42 eingelegt. Um ein Verrutschen der Rast-Aufnahmen 8 auf dem Boden der Gussform 42 zu vermeiden, sind in vorteilhafter Weise auf dem Boden der Gussform 42 Zapfen 52 vorgesehen, auf die der Rast-Aufnahmen 8 aufsteckbar sind. Nach dem Einlegen der Rast-Aufnahme 8 und des zugeordneten Verankerungselements 12 in die Gussform 42 wird der Steckschaumkörper 4 von oben her in die Gussform 42 eingebracht, wobei der Steckschaumkörper 4 sich auf der Oberseite der Verankerungselemente 12 abstützt.

In einer vorteilhaften Ausführungsform ist der Steckschaumkörper 4 hierbei bereits von dem Verstärkungs-Geflecht 16 überzogen, welches sich bis in den für die Basis 2 gebildeten Hohlraum 48 erstreckt. Nach dem Verschließen der Gussform 42 mit einer den Steckschaumkörper 4 übergreifenden Verschlusshaube 44 wird über eine in der Gussform 42 angeordnete Einfüllöffnung 46 der zwischen Steckschaumkörper 4 und Gussform 38 verbleibende Hohlraum 48 mit einem selbstschäumenden Kunststoffmaterial 50, insbesondere PU-Schaum, beaufschlagt, wobei sich das selbstschäumende Kunststoffmaterial 50 von unten her gegen den Steckschaumkörper 4 aufschäumt. Hierbei werden die Rast-Aufnahme 8, die Verankerungselemente 12 sowie das Verstärkungs-Geflecht 16 vollständig von dem selbstschäumenden Kunststoffmaterial 50 umschlossen, wobei die in den Verankerungselementen 12 vorhandenen Ausnehmungen 14 zum Durchtritt des selbstschäumenden Kunststoffmaterials 50 dienen. Nach Aushärten des selbstschäumenden Kunststoffmaterials 50 kann der erfindungsgemäße Halter 1 aus der Gussform 42 entnommen werden, wobei die Basis 2 aufgrund der behinderten Ausdehnung des selbstschäumenden Kunststoffmaterials 50 am Rand der Gussform 42 und/oder der Verschlusshaube 44 eine geschlossenporige Außenoberfläche aufweist.

### Liste der Bezugszeichen

- 1: Halter
- 2: Basis
- 4: Steckschaumkörper
- 6: Trägerkörper
- 8: Rast-Aufnahme
- 10: Haltelement
- 12: Verankerungselement
- 14: Ausnehmung
- 16: Verstärkungs-Geflecht
- 18: Unterseite
- 20: Saugnapf
- 21: Mittelteil
- 22: Kopf
- 24: Abstufung
- 26: hohlzylindrischer Grundkörper
- 28: Vertiefung
- 30: Ring
- 32: Stege
- 34: Grundplatte
- 36: Widerhaken
- 38: unterer Bereich
- 40: Rand
- 42: Gussform
- 44: Verschlusshaube
- 46: Einfüllöffnung
- 48: Hohlraum
- 50: selbstschäumendes Kunststoffmaterial
- 52: Zapfen

## Patentansprüche

1. Halter für natürliche Blumen, Zweige und dergleichen, umfassend eine Basis (2) und einen darauf angeordneten Steckschaumkörper (4) aus hydrophilem oder hydrophobem Schaumkunststoff,
**dadurch gekennzeichnet,**
**dass** die Basis (2) aus selbstschäumendem Kunststoffmaterial (50), insbesondere PU-Schaum besteht oder einen solchen enthält, in die der Steckschaumkörper (4) eingeschäumt ist, und dass an der Basis (2) wenigstens eine Rast-Aufnahme (8) angeordnet ist, in die ein Halteelement (10) zur Befestigung der Basis (2) an einem Trägerkörper (6) von der Unterseite (18) der Basis (2) her einrastbar ist.

2. Halter nach Anspruch 1,
**dadurch gekennzeichnet,**
**dass** der Rast-Aufnahme (8) ein Verankerungselement (12) zur Verankerung der Rast-Aufnahme (8) in der Basis (2) zugeordnet ist, welches Ausnehmungen (14) aufweist, durch die das selbstschäumendes Kunststoffmaterial (50) der Basis (2) hindurch tritt.

3. Halter nach Anspruch 2,
**dadurch gekennzeichnet,**
**dass** das Verankerungselement (12) in das selbstschäumende Kunststoffmaterial (50) der Basis (2) eingeschäumt ist.

4. Halter nach Anspruch 3,
**dadurch gekennzeichnet,**
**dass** das Verankerungselement (12) und/oder die Rast-Aufnahme (8) eine Höhe besitzt, die im Wesentlichen der Höhe Basis (2) entspricht.

5. Halter nach Anspruch 4,
**dadurch gekennzeichnet,**
**dass** das Verankerungselement (12) und/oder die Rast-Aufnahme (8) zur Herstellung des Halters (1) in eine Gussform (42) eingelegt wird, wobei die Rast-Aufnahme (8) zur Aufnahme des Halteelementes (10) auf dem Boden der Gussform (42) angeordnet ist, der Steckschaumköper (4) sich auf der Oberseite des Verankerungselementes (12) abstützend von oben her in die Gussform (42) eingebracht wird, und die Gussform (42) nach dem Verschließen mit einer den Steckschaumkörper (4) übergreifenden Verschlusshaube (44) von unten her mit dem selbstschäumenden Kunststoffmaterial (50) beaufschlagt wird.

6. Halter nach einem der vorhergehenden Ansprüche,
**dadurch gekennzeichnet,**
**dass** die Basis (2) eine größere Breite und/oder Länge als der Steckschaumkörper (4) aufweist.

7. Halter nach einem der vorhergehenden Ansprüche,
**dadurch gekennzeichnet,**
**dass** der Steckschaumkörper (4) mit einem Verstärkungs-Geflecht (16), insbesondere aus Metalldraht, überzogen ist, welches sich bis in die Basis (2) hinein erstreckt.

8. Halter nach einem der vorhergehenden Ansprüche,
**dadurch gekennzeichnet,**
**dass** das Halteelement (10) einen in die Rast-Aufnahme (8) einsteckbaren Rastfuß mit einem pilz- oder pfeilförmigen Kopf (22) aufweist.

9. Halter nach Anspruch 8,
**dadurch gekennzeichnet,**
**dass** das Haltelement (10) zur Befestigung der Basis (2) auf einer unebenen oder gewölbten Fläche ein Mittelteil (21) aus flexiblem Material aufweist, das sich bei eingestecktem Rastfuß über die Unterseite (18) der Basis (2) hinaus erstreckt.

10. Halter nach einem der vorhergehenden Ansprüche,
**dadurch gekennzeichnet,**
**dass** das Haltelement (10) an dem der Rast-Aufnahme (8) abgewandten Ende einen Saugnapf (20) und/oder eine selbstklebende Fläche zur Befestigung des Halteelementes (10) auf einer glatten Oberfläche aufweist.

11. Halter nach einem der Ansprüche 1 bis 9,
**dadurch gekennzeichnet,**
**dass** das Haltelement (10) an dem der Rast-Aufnahme (8) abgewandten Ende ein Element aus magnetischem Material zur Befestigung des Haltelementes (10) an einem magnetischen Trägerkörper (6) aufweist.

12. Halter nach einem der Ansprüche 1 bis 9,
**dadurch gekennzeichnet,**
**dass** das Haltelement (10) an dem der Rast-Aufnahme (8) abgewandten Ende einen Spiess zum Einstecken des Halteelementes (10) in das Erdreich aufweist.

13. Halter nach einem der Ansprüche 1 bis 9,
**dadurch gekennzeichnet,**
**dass** das Haltelement (10) an dem der Rast-Aufnahme (8) abgewandten Ende eine Spiralfeder zum Eindrehen des Haltelementes (10) insbesondere in Strohballen oder dergleichen aufweist.

14. Halter nach einem der vorhergehenden Ansprüche,
**dadurch gekennzeichnet,**
**dass** an der Basis (2) mehrere Rast-Aufnahmen (10) angeordnet sind.
